# EUROPÄISCHE PATENTSCHRIFT

(11) **EP 1 217 847 B1**
(45) Veröffentlichungstag und Bekanntmachung des Hinweises auf die Patenterteilung: **10.07.2013**
(21) Anmeldenummer: 01130329.4
(22) Anmeldetag: 19.12.2001
(51) Int. Cl.: H04Q 3/62, H04Q 11/04

(54) **Vermittlungseinrichtung für ein privates Telekommunikationsnetz**
Switching arrangement for a private telecommunication network
Dispositif de commutation pour un réseau de télécommunication privé

(30) Priorität: 21.12.2000 DE 10064045
(43) Veröffentlichungstag der Anmeldung: 26.06.2002
(73) Patentinhaber: Tenovis GmbH & Co. KG, 60326 Frankfurt am Main (DE)
(72) Erfinder: Rodewald, Frank, 50181 Bedburg (DE)
(74) Vertreter: Tergau & Walkenhorst

(56) Entgegenhaltungen:
- EP-A2- 0 878 972
- WO-A-96/21323
- US-A- 4 754 479
- US-A- 5 892 821

## Beschreibung

Die Erfindung betrifft eine Vermittlungseinrichtung für ein privates Telekommunikationsnetz.

Gemäß den ETSI-Standards für den Basic Call (z. B. EDSS1, QSIG) besteht eine ISDN-Adresse aus verschiedenen Feldern. Diese Felder umfassen ein die Ziffern der Rufnummer enthaltendes Ziffernfeld und ein die Anzahl der Ziffern angebendes Längenfeld sowie als Zusatzelemente einen Numerierungsplanindikator (NPI), der den verwendeten Numerierungsplan bezeichnet, einen Nummerntypindikator (TON), der die Art der Rufnummer bezeichnet, einen Präsentationsindikator (PI), der angibt, ob die Rufnummer des rufenden Teilnehmers beim gerufenen Teilnehmer angezeigt werden soll, und einen sogenannten Screening Indicator (SI), der angibt, ob die Rufnummer des rufenden Teilnehmers von dessen Endgerät oder vom Netz bereitgestellt wurde und ob diese Nummer vom Netzbetreiber geprüft wurde. Die Zusatzelemente PI und SI sind lediglich in der ISDN-Adresse der rufenden Partei enthalten. Der Numerierungsplanindikator NPI kann gemäß der oben genannten Standards die Inhalte unbekannt, ISDN, Daten, Telex und privat annehmen.

Bei Verwendung des ISDN-Numerierungsplans kann der Nummerntypindikator TON gemäß der Empfehlung E.164, z. B. die Inhalte unbekannt, international oder national annehmen. Bei Verwendung eines privaten Numerierungsplans (NPI = privat) kann der Nummerntypindikator TON gemäß dem ETS-Standard 300 189 z. B. die Inhalte unbekannt, Ebene 2 regional, Ebene 1 regional oder lokal annehmen.

Diese Standards gibt es bereits seit längerer Zeit. Innerhalb von privaten, aus einer oder mehreren Telekommunikationsanlagen aufgebauten Telekommunikationsnetzen wurde zur Adressierung in der Regel nur ein sogenannter impliziter Numerierungsplan verwendet. Implizit bedeutet, daß allein die Ziffern der Rufnummer ausreichend sind, um den betreffenden Teilnehmer zu identifizieren. Die Zusatzelemente NPI und TON sind dabei beide auf unbekannt gesetzt.

Ein solches System ist z.B. offenbart im Dokument EP 0 878 972 A.

Mit zunehmender Verbreitung von nach dem DSS-1-Protokoll arbeitenden Vermittlungsämtern in öffentlichen Telekommunikationsnetzen wurden die Hersteller von Telekommunikationsanlagen freilich gezwungen, ihre Geräte so zu konfigurieren, daß diese bei gehenden Rufen in Richtung zu einem solchen Amt Adressen mit NPI = ISDN und einem zu den Ziffern der Rufnummer passenden Wert des Nummerntypindikators TON codieren (z. B. TON = international bei einer Rufnummer 49-211-5354-334 oder TON = national bei einer Rufnummer 211-5354-334). Gleichzeitig mußten die Telekommunikationsanlagen die Decodierung solcher von einem Amt kommenden Adressen beherrschen. Seit einiger Zeit ist zunehmend auch der Screening Indicator SI von Bedeutung. Bisher wurde lediglich die explizite Codierung der Rufnummer des rufenden Teilnehmers vom Amt geprüft. Zukünftig ist aber auch beabsichtigt, die Rufnummer des gerufenen Teilnehmers auf explizite Codierung zu prüfen.

Um Telekommunikationsanlagen verschiedener Hersteller zu einem privaten Telekommunikationsnetz zusammenschalten zu können, wird seit einiger Zeit das Quervernetzungsprotokoll QSIG eingesetzt. Von Kunden wird dabei vermehrt der Wunsch geäußert, innerhalb eines solchen Verbundes von Telekommunikationsanlagen nach Bedarf verschiedene Numerierungspläne verwenden zu können, beispielsweise den ISDN-Numerierungsplan und einen privaten Numerierungsplan. So kann es dann vorkommen, daß auf ein und derselben Leitung Rufnummern auftauchen, die verschiedenen Numerierungsplänen zugehörig sind.

In der Praxis hat es sich gezeigt, daß es dabei zu Adressierungsproblemen kommen kann, die zu Beeinträchtigungen bis hin zum Ausfall des Basisverkehrs oder einzelner Dienstmerkmale führen können. Gründe hierfür können unter anderem sein, daß die eigene Telekommunikationsanlage Adressen falsch codiert oder daß eine in den Anlagenverbund integrierte Telekommunikationsanlage eines anderen Herstellers falsch codierte Adressen liefert. Ein weiterer Grund kann sich daraus ergeben, daß bei Verwendung eines privaten Numerierungsplans vom Netzbetreiber ein eindeutiges Adreßschema (z. B. Ebene 2, Ebene 1, lokal) vorgegeben werden muß.

Für den Kunden ist die Codierung der Adressen in der Regel uninteressant, weswegen die Hersteller der Telekommunikationsanlagen ihre eigenen Interpretationen einführen. Treffen dann Telekommunikationsanlagen verschiedener Hersteller in einem Anlagenverbund aufeinander, so kann es sein, daß die in den einzelnen Telekommunikationsanlagen implementierten Adreßcodierungskonzepte nicht zueinander passen.

Adressierungsprobleme können auch dann auftreten, wenn zwei bestehende private Telekommunikationsnetze mit jeweils eigenem privaten Numerierungsplan zusammengeschaltet werden. Dies kann beispielsweise bei einem Zusammenschluß zweier Firmen der Fall sein.

Eine andere Quelle für Adressierungsprobleme kann beispielsweise sein, daß über sogenannte Gateway-Anlagen (die auf neuem Software-Stand sind) Altanlagen mit noch fehlerhafter Software zugeschaltet sind, etwa über eine QSIG-Leitung (mit fehlerhafter Codierung) oder eine Leitung mit privatem Protokoll (fehlerhaft codierend).

Wenn hier von einer falschen oder fehlerhaften Codierung einer Adresse die Rede ist, so sei darunter eine Codierung verstanden, die zu Fehlinterpretationen führen kann, weil sie beispielsweise von einer Telekommunikationsanlage älterer Bauart stammt und von einer Telekommunikationsanlage neuerer Bauart oder eines anderen Herstellers nicht ohne weiteres verstanden wird oder weil sie beispielsweise systematische Fehler enthält. Allgemein kann dann das Problem auftauchen, daß innerhalb eines privaten Telekommunikationsnetzes Adressen übermittelt werden, die nicht zueinander kompatibel sind.

Problemerzeugend kann es auch sein, wenn ein Hersteller seine Telekommunikationsanlagen in einem Netz hardware- oder softwaremäßig modifiziert. Schon eine geringfügige Änderung des Adreßcodierungskonzepts eines Teils der Telekommunikationsanlagen eines Netzes kann nämlich unter Umständen bereits zu einem völligen Ausfall selbst des Basisverkehrs führen, der zuvor noch ohne weiteres möglich war.

All diese Probleme können bei den Kunden zu großen Unannehmlichkeiten und Ärger führen. Erschwerend kommt hinzu, daß gelegentlich der Hersteller einer fehlerhaften Telekommunikationsanlage nicht mehr bereit ist, deren Software zu pflegen und ggf. zu korrigieren. Will der Kunde diese Telekommunikationsanlage dennoch in seinem Anlagenverbund behalten, etwa weil er sich aus Kostengründen keine neue anschaffen will, so kann sich der Hersteller einer anderen, an sich ordnungsgemäß funktionierenden Telekommunikationsanlage dieses Verbunds vom Kunden auf einmal gezwungen sehen, eine Anpassung der von ihm hergestellten Anlage vorzunehmen. Ärger kann es auch bereiten, wenn mehrere Hersteller, von denen Telekommunikationsanlagen in einem Verbund zusammengeschlossen sind, behaupten, die von ihnen jeweils hergestelten Anlagen würden die Adressen korrekt codieren. Der Kunde wird dann gezwungen sein, einen der Hersteller zur Anpassung seiner Anlagen zu verpflichten.

Bei all dem ist zu berücksichtigen, daß die softwaremäßige Anpassung der Adreßcodierung einer Telekommunikationsanlage sehr zeit- und kostenintensiv sein kann. Beispielsweise müssen manchmal erst zahlreiche Testläufe im Labor durchgeführt werden, bevor eine angepaßte Software an den Kunden ausgeliefert wird. Der Kunde muß so warten und zumindest eine Zeitlang mit seinen Problemen leben. Zudem muß zunächst einmal die Fehlerquelle exakt ermittelt werden.

Auch das Neuladen der Telekommunikationsanlagen mit der angepaßten Software kann bei einigen Kunden Schwierigkeiten bereiten, beispielsweise wenn es sich um ein Telekommunikationsnetz der Polizei oder einer Bank handelt. Sodann wird man in der Regel noch Nachtests beim Kunden durchführen, um das tatsächliche Funktionieren der neu implementierten Software zu verifizieren.

Aufgabe der Erfindung ist es daher, einen Weg aufzuzeigen, wie in einem privaten Telekommunikationsnetz auf einfache Weise mit Adressen umgegangen werden kann, die auf Grundlage unterschiedlicher Adreßbildungkonzepte (etwa unterschiedlicher Numerierungspläne) gebildet sind oder/und bei denen damit gerechnet werden muß, daß bei der Bildung der Adresse Fehler aufgetreten sein können.

Zur Lösung dieser Aufgabe ist erfindungsgemäß eine Vermittlungseinrichtung für ein privates Telekommunikationsnetz mit den Merkmalen des Anspruchs 1 vorgesehen. Gemäß der Erfindung umfaßt die Vermittlungseinrichtung eine Konvertierungseinheit zur Konvertierung einer in einem die Vermittlungseinrichtung erreichenden Ruf enthaltenen Adresse, z. B. Teilnehmeradresse. Dabei ist die Konvertierungseinheit dazu eingerichtet, im Rahmen der Adreßkonvertierung mindestens einen Teil der Adresse, z. B. Teilnehmeradresse, zu ändern.

Ein wesentlicher Gedanke der erfindungsgemäßen Lösung ist es, vor Ort (d.h. in der die Rufe empfangenden Vermittlungseinrichtung) die Adressen zu manipulieren. In jedem über eine Leitung kommenden oder gehenden Ruf kann die darin enthaltene Adresse (bzw. mindestens eine der darin enthaltenen Adressen, falls nicht nur die Adresse der gerufenen Partei sondern auch die Adresse der rufenden Partei übermittelt werden) in eine beliebige andere Adresse umgewandelt werden.

Dabei können die Regeln für die Umwandlung vor Ort ohne Funktionsunterbrechung der Vermittlungseinrichtung per Verwaltungstool eingerichtet werden.

Auf diese Weise kann beispielsweise eine fehlerhaft codierte Adresse in einem Ruf, der von einer fremden Telekommunikationsanlage an die erfindungsgemäße Vermittlungseinrichtung gelangt, von deren Konvertierungseinheit in eine andere Adresse umgewandelt werden, die nun richtig codiert ist und für die weiteren Vermittlungsvorgänge problemlos weiterverwendet werden kann. Auch kann mittels der Konvertierungseinheit eine Adresse von einem Numerierungsplan in einen anderen umgewandelt werden. Da die Einrichtung der Konvertierungseinheit vergleichsweise wenig aufwendig ist, kann dem Kunden so sehr schnell eine Lösung zu seinen oben diskutierten Problemen angeboten werden.

Die Konvertierungseinheit kann dazu eingerichtet sein, die Adresse des rufenden Teilnehmers oder/und des gerufenen Teilnehmers zu konvertieren. Ebenso sollen leistungsmerkmalsspezifische Adressen konvertiert werden. Im folgenden sind überall, wo von "Adresse des rufenden" oder "Calling Party Number" die Rede ist, auch die "Connected Number" und leistungsmerkmalsspezifische Adresse gemeint.

Gemäß einer bevorzugten Ausführungsform kann die Konvertierungseinheit dazu eingerichtet sein, im Rahmen der Konvertierung der enthaltenen Adresse, z. B. Teilnehmeradresse, eine in dieser enthaltene, gemäß einem ersten Numerierungsplan gebildete Rufnummer durch eine Rufnummer eines zweiten Numerierungsplans zu ersetzen. Alternativ oder zusätzlich kann die Konvertierungseinheit dazu eingerichtet sein, im Rahmen der Konvertierung der enthaltenen Adresse, z. B. Teilnehmeradresse, einen in dieser enthaltenen Numerierungsplanindikator und/oder Screening Indicator und/oder Presentation Indicator zu beeinflussen. Ebenso kann die Konvertierungseinheit dazu eingerichtet sein, im Rahmen der Konvertierung der Teilnehmeradresse einen in dieser enthaltenen Nummerntypindikator zu beeinflussen.

Eine bevorzugte Weiterbildung der Erfindung sieht vor, daß die Konvertierungseinheit einen Speicher umfaßt, in dem mindestens ein Datensatz gespeichert ist, welcher in Zuordnung zu ersten Adreßbestandteilen zweite Adreßbestandteile umfaßt. Die Konvertierungseinheit ist bei dieser Weiterbildung dazu eingerichtet, bei jedem die Vermittlungseinrichtung erreichenden Ruf eine in diesem enthaltene Teilnehmeradresse auf Übereinstimmung mit den gespeicherten ersten Adreßbestandteilen zu überprüfen und bei Übereinstimmung die zugeordneten zweiten Adreßbestandteile in die Teilnehmeradresse zu übernehmen. Vorzugsweise umfassen die ersten Adreßbestandteile zumindest einen Teil einer Teilnehmerrufnummer. Dann ist es insbesondere möglich, daß auch die zweiten Adreßbestandteile zumindest einen Teil einer Teilnehmerrufnummer umfassen.

Die Vermittlungsaufgaben der erfindungsgemäßen Vermittlungseinrichtung werden bevorzugt von einer Telekommunikationsanlage des privaten Telekommunikationsnetzes erfüllt. Die Konvertierungseinheit kann dann baulich in diese Telekommunikationsanlage integriert sein. Es ist aber auch denkbar, die Konvertierungseinheit baulich von dieser Telekommunikationsanlage getrennt anzuordnen.

Die Aufgaben der Konvertierungseinheit werden vorzugsweise von einem Softwaremodul erfüllt, welches in die Vermittlungseinrichtung implementiert ist. Dieses Softwaremodul kann vorteilhafterweise nachträglich in die Vermittlungseinrichtung implementiert und gewünschtenfalls auch nachträglich über Einrichtungsdaten vor Ort noch modifiziert werden, so daß eine bestehende Vermittlungseinrichtung optimal an die jeweiligen Kundenwünsche angepaßt werden kann.

Nachfolgend wird ein Ausführungsbeispiel der Erfindung anhand der beigefügten Zeichnungen näher erläutert. Es stellen dar:
Fig. 1 ein schematisches Blockdiagramm eines Telekommunikationssystems mit der erfindungsgemäßen Vermittlungseinrichtung,
Fig. 2 ein Muster eines in der Vermittlungseinrichtung niedergelegten Datensatzes zur Adreßkonvertierung und
Fig. 3 bis 7 verschiedene konkrete Beispiele für einen solchen Konvertierungsdatensatz.

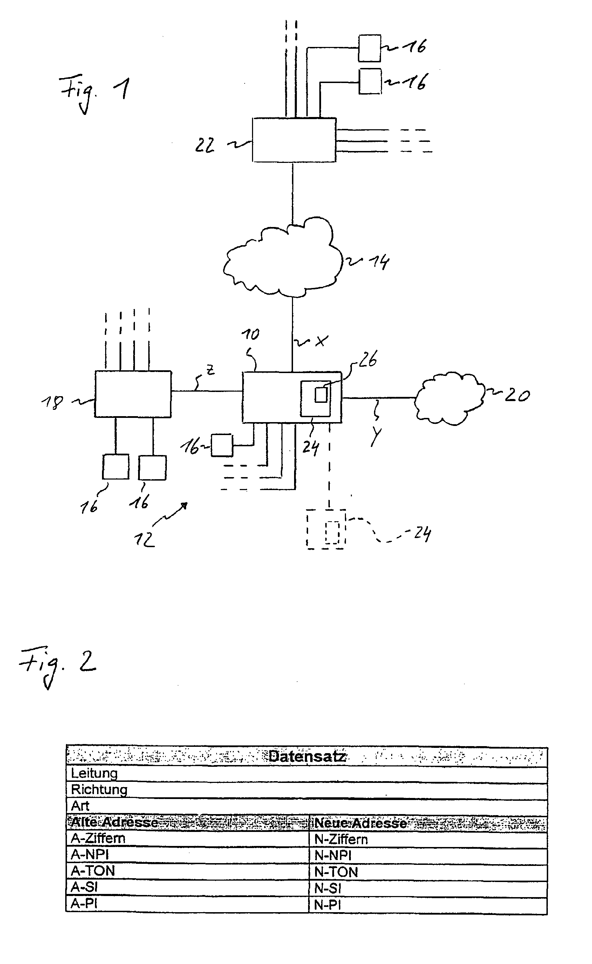

In Fig. 1 ist mit 10 eine Vermittlungseinrichtung bezeichnet, welche Teil eines allgemein mit 12 bezeichneten ersten privaten Telekommunikationsnetzes ist. Die Vermittlungseinrichtung 10 vermittelt Rufe zwischen diesem privaten Telekommunikationsnetz 12 (nachfolgend Kundennetz genannt) und einem öffentlichen Telekommunikationsnetz 14, beispielsweise einem ISDN-Netz. Sie ist bevorzugt von einer Telekommunikationsanlage gebildet, an die eine Vielzahl von Telekommunikationsendgeräten 16 angeschlossen ist, beispielsweise Telefone, Faxgeräte und dergleichen Zur Bildung des ersten Kundennetzes 12 ist mindestens eine weitere Telekommunikationsanlage 18 mit der Telekommunikationsanlage 10 zu einem Anlagenverbund zusammengeschaltet. Auch an die Telekommunikationsanlage 18 sind mehrere Telekommunikationsendgeräte 16 angeschlossen.

Im vorliegenden Beispielfall wird ferner davon ausgegangen, daß das erste Kundennetz 12 mit einem zweiten Kundennetz 20 quervernetzt ist, beispielsweise infolge der Zusammenschaltung der Netze nach einer Firmenfusion. Außerdem wird davon ausgegangen, daß über das öffentliche Netz 14 mindestens eine weitere Telekommunikationsanlage 22 mit daran angeschlossenen Endgeräten 16 dem Kundennetz 12 angehört.

Der Telekommunikationsanlage 10 ist eine Konvertierungseinheit 24 mit einem Konvertierungsdatenspeicher 26 zugeordnet. Die Konvertierungseinheit 24 dient zur Konvertierung von Adressen in Rufen, die zwischen dem ersten Kundennetz 12 und dem zweiten Kundennetz 20 oder/und innerhalb des Kundennetzes 12 zwischen verschiedenen der Telekommunikationsanlagen dieses Netzes 12 auftreten. Sie kann integraler Bestandteil der Telekommunikationsanlage 10 sein. Sie kann aber beispielsweise auch auf einem separaten Server implementiert sein, der mit der Telekommunikationsanlage 10 verbunden ist, wie in Fig. 1 gestrichelt angedeutet ist.

Bei allen kommenden Rufen, die die Telekommunikationsanlage 10 erreichen, werden zunächst alle in diesen Rufen oder Meldungen enthaltenen Adressen aus dem jeweils verwendeten Übertragungsprotokoll (z. B. DSS-1, QSIG oder TNET) decodiert und in der Telekommunikationsanlage 10 auf ein einheitliches internes Format gebracht. Jede Adresse wird sodann an die Konvertierungseinheit 24 geschickt. Zusätzlich werden dabei die folgenden Informationen an die Konvertierungseinheit 24 geliefert: eine Kennung der Leitung, auf der der betreffende Ruf einging, eine Kennzeichnung des Rufs als kommend und eine Bezeichnung für die Art der Adresse, nämlich ob es sich bei der Adresse um die Adresse des rufenden Teilnehmers oder die des gerufenen Teilnehmers handelt.

Die an die Konvertierungseinheit 24 übermittelten Adressen werden dort bei Bedarf (also nicht notwendigerweise jede Adresse) nach vorbestimmten Regeln in eine andere Adresse konvertiert. Statt der möglicherweise falsch codierten Originaladresse aus der Meldung wird dann die konvertierte Adresse für alle weiteren vermittlungstechnischen Abläufe in der Telekommunikationsanlage 10 verwendet.

Bei gehenden Rufen, die die Telekommunikationsanlage 10 verlassen, wird vor der Codierung der Adressen in das jeweilige Übertragungs- oder Signalisierungprotokoll ebenfalls jede Adresse an die Konvertierungseinheit 24 geschickt. In diesem Fall werden als Zusatzinformationen eine Kennung der Leitung, auf der der betreffende Ruf abgehen soll, eine Kennzeichnung des Rufs als gehend und die Art der jeweiligen Adresse an die Konvertierungseinheit 24 mitgeliefert. Besteht für die jeweilige Adresse Konvertierungsbedarf, liefert die Konvertierungseinheit 24 eine konvertierte Adresse, ansonsten die Originaladresse zur weiteren Verwendung zurück.

Um zu erkennen, ob für eine der Konvertierungseinheit 24 zugeführte Adresse Konvertierungsbedarf besteht, enthält der Konvertierungsdatenspeicher 26 mindestens einen, in aller Regel jedoch mehrere vorgespeicherte Datensätze, die nach dem in Fig. 2 gezeigten Muster aufgebaut sind. Im Kopf jedes Datensatzes sind drei Felder vorgesehen, nämlich eines ("Leitung"), das eine Angabe über eine bestimmte Leitung (oder gewünschtenfalls auch mehrere Leitungen) enthält, ein anderes ("Richtung") mit einer Angabe zur Rufrichtung (kommend oder/und gehend) und ein drittes ("Art") mit einer Angabe zur Adressenart (rufender oder/und gerufener Teilnehmer).

Darüber hinaus enthält jeder Datensatz eine Gruppe von Feldern, in die Angaben über eine alte Adresse eingetragen sein können. Speziell umfassen bei dem hier erläuterten Beispielfall die Felder für die alte Adresse ein Feld "A-Ziffern", in das mindestens ein Teil der Ziffern einer Rufnummer der alten Adresse eingetragen sein kann. Ferner gibt es ein Feld "A-NPI", in das ein Numerierungsplanindikator für die alte Adresse eingetragen sein kann. Weiterhin gibt es ein Feld "A-TON", in das ein Nummertypindikator für die alte Adresse eingetragen sein kann. Schließlich gibt es noch Felder "A-SI" und "A-PI", in die ein Screening-Indikator bzw. ein Präsentationsindikator für die alte Adresse eingetragen sein können.

In Entsprechung zu der Gruppe von Feldern für die alte Adresse weist jeder Datensatz zudem eine Gruppe von Feldern "N-Ziffern", "N-NPI", "N-TON", "N-SI" und "N-PI" für eine neue Adresse auf. In diese Felder können analog zu den Feldern für die alte Adresse mindestens ein Teil der Ziffern einer Rufnummer der neuen Adresse, ein Numerierungsplanindikator, ein Nummertypindikator, ein Screening-Indikator und ein Präsentationsindikator für die neue Adresse eingetragen sein.

Erhält die Konvertierungseinheit 24 eine Adresse, so vergleicht sie die gespeicherten Datensätze in dem Konvertierungsdatenspeicher 26 mit der gelieferten Adresse. Speziell prüft sie, ob die Adresse und deren mitgelieferte Zusatzinformationen betreffend Leitung, Rufrichtung und Adreßart mit den Einträgen in den Feldern "Leitung", "Richtung" und "Art" und in den Feldern für die alte Adresse in einem der Datensätze übereinstimmen. Findet sie einen solchen übereinstimmenden Datensatz, konvertiert die Konvertierungseinheit 24 die zur Überprüfung zugeführte Adresse, indem sie einzelne oder alle Bestandteile dieser Adresse durch die in dem Datensatz enthaltenen Einträge in den Feldern für die neue Adresse ersetzt. Die so konvertierte Adresse wird dann zurückgegeben. Wird kein übereinstimmender Datensatz gefunden, wird die Originaladresse zurückgegeben.

Oftmals wird es nicht erforderlich sein, alle Komponenten einer Adresse zu ändern. Deshalb können die Felder für die neue Adresse in den Datensätzen Platzhalter enthalten, die bewirken, daß die betreffende Komponente der überprüften Adresse nicht ersetzt wird. Es ist sogar denkbar, daß das Feld "N-Ziffern" nur einen Teil der Ziffern der gewünschten neuen Rufnummer und zusätzlich einen Platzhalter enthält, der bewirkt, daß für den restlichen Teil der gewünschten neuen Rufnummer die entsprechenden Ziffern der Originaladresse unverändert übernommen werden.

Auch die Felder für die alte Adresse in den Datensätzen können Platzhalter enthalten. Diese bewirken, daß beim Durchsuchen der Datensätze die betreffenden Felder (oder Teile von Feldern) ignoriert werden. Die Platzhalter können beispielsweise dadurch gekennzeichnet werden, daß in die betreffenden Felder ein oder mehrere vorbestimmte Sonderzeichen eingetragen werden.

Allgemein gesprochen wird also bei der Adreßkonvertierung stets zumindest ein Teil der Bestandteile einer Adresse durch neue ersetzt. Wird nicht die gesamte Adresse vollständig neu gebildet, so werden die verbleibenden Adreßbestandteile aus der ursprünglichen Adresse übernommen. Bei der Prüfung, ob überhaupt Konvertierungsbedarf besteht, kann ebenfalls zumindest ein Teil der Adreßbestandteile nach vorgegebenen Kriterien untersucht werden. Es ist jedoch nicht zwingend notwendig, die Adresse selbst zu untersuchen. Es kann bereits genügen, als Kriterium zur Bejahung des Konvertierungsbedarfs festzulegen, daß die Adresse auf einer bestimmten Leitung oder/und auf einem bestimmten Leitungsbündel gekommen sein muß oder verschickt werden soll. Ein solches leitungsbezogenes Prüfkriterium kann im übrigen auch dann gelten, wenn auch der Inhalt der Adresse zumindest teilweise geprüft wird.

Es werden nun verschiedene Beispielfälle erläutert.

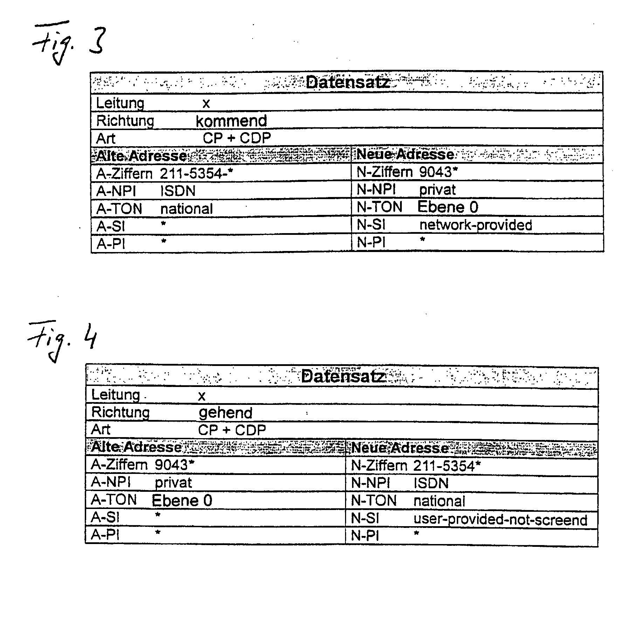

Ein erster Beispielfall veranschaulicht eine Rufnummernkonvertierung zwischen dem für das öffentliche Netz 14 verwendeten ISDN-Numerierungsplan gemäß ITU-T Empfehlung E.164 und einem innerhalb des Kundennetzes 12 geltenden privaten Numerierungsplan nach ETS-Standard 300 189. Dabei wird angenommen, daß ein an die Telekommunikationsanlage 22 angeschlossener Teilnehmer über das öffentliche Netz 14 die Telekommunikationsanlage 10 ruft. Dieser Ruf gelangt auf einer Amtsleitung x zu der Telekommunikationsanlage 10. Die auf dieser Amtsleitung x übertragene öffentliche Rufnummer des anrufenden Teilnehmers soll in eine Rufnummer des privaten Numerierungsplans umgewandelt werden, um sie auf einer Anzeige des gerufenen Endgeräts anzuzeigen. Dabei sei der Telekommunikationsanlage 22 im vorliegenden ersten Beispielfall im ISDN-Numerierungsplan die nationale Knotennummer 211-5354 und im privaten Numerierungsplan die Knotennummer 9043 der Ebene 0 (lokal) zugeordnet. Fig. 3 zeigt einen geeigneten Datensatz, der die gewünschte Konvertierung der öffentlichen in die private Nummer gewährleistet. Fig. 4 zeigt einen Datensatz, der diese Konvertierung bei gehenden Rufen wieder rückgängig macht.

In den Fig. 3 und 4 bezeichnen CP den rufenden Teilnehmer ("Calling Party") und CDP den gerufenen Teilnehmer ("Called Party"). CD + CDP bedeutet, daß der Datensatz sowohl für die Adresse des rufenden Teilnehmers als auch die des gerufenen Teilnehmers gilt. Das "*"-Zeichen stellt den oben erwähnten Platzhalter dar. Der Eintrag "network-provided" bedeutet, daß die betreffende Adresse vom dem NPI entsprechenden Netzwerk bereitgestellt ist, der Eintrag "user-provided-not screened", daß die betreffende Adresse vom jeweiligen Nutzer bereitgestellt ist und nicht geprüft ist, wobei bezogen auf den ISDN-NP der Nutzer die TK-Anlage ist, bezogen auf den privaten NP ist es das Endgerät.

Ein zweiter Beispielfall veranschaulicht die Adreßkonvertierung zwischen einem privaten Numerierungsplan und einem impliziten Numerierungsplan. Dabei wird angenommen, daß von den beiden zusammengeschalteten Kundennetzen das erste Kundennetz 12 zur Codierung der Knotennummer den privaten Numerierungsplan verwendet und das zweite Kundennetz 20 hierfür den impliziten Numerierungsplan verwendet (dies ist möglich, wenn im gesamten Netz die Ziffern der Knotennummer eine eindeutige Identifizierung des Knotens zulassen).

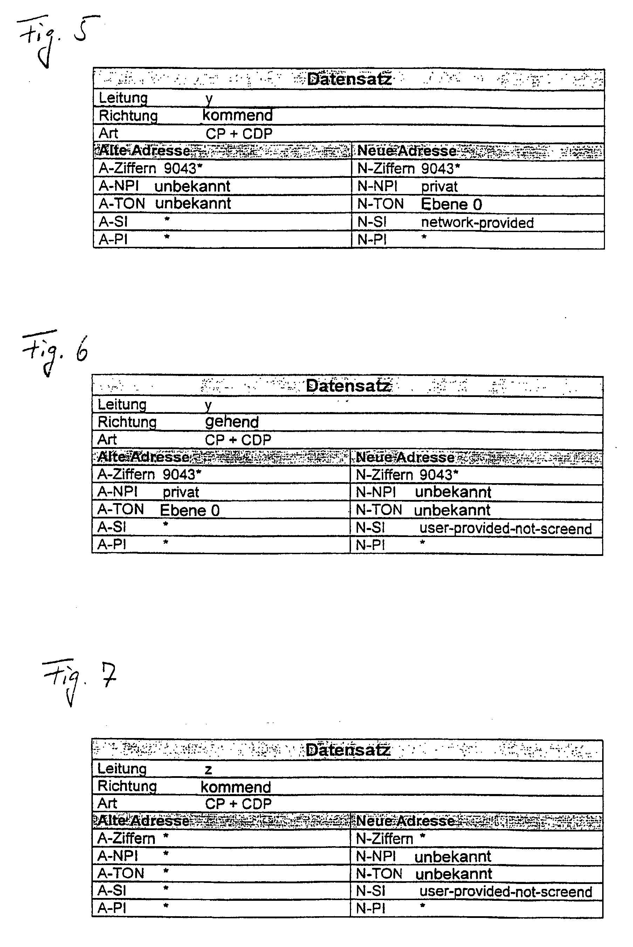

Ferner wird angenommen, daß auf einer die beiden Kundennetze 12, 20 verbindenden QSIG-Leitung y ein Ruf bei der Telekommunikationsanlage 10 eingeht, der eine Adresse mit der Teilnehmerrufnummer 9043-334 und den Parametern NPI = unbekannt und TON = unbekannt enthält. Um diese Adresse in das Format des privaten Numerierungsplans zu konvertieren, kann ein geeigneter Konvertierungsdatensatz so aussehen, wie er in Fig. 5 gezeigt ist. Fig. 6 zeigt wiederum einen Datensatz zur Rückkonvertierung bei gehenden Rufen.

Ein drittes Beispiel befaßt sich mit dem Fall einer falsch codierten Adresse. Es sei bei diesem Beispiel angenommen, daß die Telekommunikationsanlage 18 Adressen immer nach einem impliziten Numerierungsplan (bei eindeutiger Identifizierbarkeit durch die Ziffern) codiert, jedoch dabei die Zusatzelemente NPI, TON und SI möglicherweise falsch codiert. Damit diese Zusatzelemente bei kommenden Rufen, die die Telekommunikationsanlage 10 auf einer QSIG-Leitung z erreichen, nicht falsch von der Telekommunikationsanlage 10 interpretiert werden, kann für diese Leitung z der in Fig. 7 gezeigte Datensatz eingerichtet werden. Es versteht sich, daß zur Einrichtung eines solchen Datensatzes bekannt sein muß, welcher Art die von der Telekommunikationsanlage 18 begangenen Codierungsfehler sind.

Bisher wurde davon ausgegangen, daß in dem Konvertierungsdatenspeicher 26 ein oder mehrere Datensätze nach Art einer Datenbank gespeichert sind und die Konvertierungseinheit 24 bei Erhalt einer Adresse diese Datenbank auf einen mit der Adresse übereinstimmenden Datensatz hin durchsucht. Es ist jedoch auch denkbar, auf eine solche Datenbank zu verzichten und den Prüfvorgang wie auch den eigentlichen Konvertierungsvorgang allein in Form eines Algorithmus softwaremäßig zu implementieren. Dabei werden dann in dem Algorithmus selbst geeignete Prüfkriterien festgelegt sein, nach denen die empfangene Adresse untersucht wird. Für den zuvor erläuterten dritten Beispielfall, bei dem angenommen wurde, daß die auf der Leitung z von der Telekommunikationsanlage 18 kommenden Rufe möglicherweise fehlerbehaftete Adressen enthalten, würde beispielsweise folgendes Prüfkriterium genügen: Ist die gerade zu prüfende Adresse auf Leitung z gekommen? Wird diese Frage bejaht, müßte der Algorithmus ferner lediglich so ausgestaltet sein, daß er die gewünschte Belegung der Adreßzusatzelemente NPI, TON und SI bewirkt. Es versteht sich, daß sich eine solche rein algorithmische, nicht datenbankgestützte Implementierung der Adreßprüfung und -konvertierung besonders dann anbietet, wenn die Zahl der unterschiedlich zu behandelnden Konvertierungsfälle nicht allzu groß ist.

Gleichgültig, ob eine rein algorithmische Implementierung oder eine Implementierung mit Datensätzen gewählt wird, können bestehende Telekommunikationsanlagen oder andere Telekommunikationseinrichtungen mit Vermittlungsfunktion ohne weiteres mit der erfindungsgemäßen Lösung nachgerüstet werden. Hierzu genügt eine softwaremäßige Anpassung der betreffenden Anlage oder sonstigen Einrichtung, in deren Rahmen ein die Prüf- und Konvertierungsaufgaben erfüllendes Adreßverwaltungsprogramm (ggf. zusammen mit einer die Datensätze enthaltenden Datenbank) implementiert wird. Dieses Adreßverwaltungsprogramm kann speziell auf die Bedürfnisse des Anwenders abgestimmt werden und ist vorteilhafterweise sogar bei Bedarf umkonfigurierbar, um etwaigen späteren geräte- oder softwaretechnischen Modifikationen des vom Anwender betriebenen privaten Netzes Rechnung tragen zu können.

### Bezugszeichenliste

- 10: Vermittlungseinrichtung
- 12: erstes Kundennetz
- 14: öffentliches Telekommunikationsnetz
- 16: Telekommunikationsendgerät
- 18: Telekommunikationsanlage
- 20: zweites Kundennetz
- 22: Telekommunikationsanlage
- 24: Konvertierungseinheit
- 26: Konvertierungsdatenspeicher

## Patentansprüche

1. Vermittlungseinrichtung für ein privates Telekommunikationsnetz (12),
mit
einer ihr zugeordneten Konvertierungseinheit (24) zur Konvertierung einer in einem die Vermittlungseinrichtung erreichenden oder verlassenden Ruf enthaltenen Adresse, z. B. Teilnehmeradresse, wobei die Konvertierungseinheit (24) dazu eingerichtet ist, im Rahmen dieser Konvertierung mindestens einen Teil der enthaltenen Adresse, z. B. Teilnehmeradresse, zu ändern,
die Konvertierungseinheit einen Speicher (26) umfasst, in dem mindestens ein Datensatz gespeichert ist, welcher in Zuordnung zu ersten Adressbestandteilen zweite Adressbestandteile umfasst,
**dadurch gekennzeichnet, dass**
die Adressbestandteile jeweils neben Ziffern der Rufnummer mindestens ein Zusatzelement umfassen, jeder Datensatz eine Angabe über eine bestimmte Leitung und eine Angabe über die Rufrichtung enthält, und dass die Konvertierungseinheit (24) dazu eingerichtet ist, bei jedem die Vermittlungseinrichtung erreichenden oder verlassenden Ruf zu prüfen, ob Leitung und Rufrichtung des Rufes mit den Angaben in einem der Datensätze übereinstimmen und im Falle der Übereinstimmung die Konvertierung anhand des übereinstimmenden Datensatzes durchgeführt wird.

2. Vermittlungseinrichtung nach Anspruch 1,
**dadurch gekennzeichnet, dass**
die Konvertierungseinheit (24) dazu eingerichtet ist, die Adresse des rufenden Teilnehmers zu konvertieren.

3. Vermittlungseinrichtung nach Anspruch 1 oder 2,
**dadurch gekennzeichnet, dass**
die Konvertierungseinheit (24) dazu eingerichtet ist, die Adresse des gerufenen Teilnehmers oder durch Leistungsmerkmale übermittelte Adressen zu konvertieren.

4. Vermittlungseinrichtung nach einem der Ansprüche 1 bis 3,
**dadurch gekennzeichnet, dass**
die Konvertierungseinheit (24) dazu eingerichtet ist, im Rahmen der Konvertierung der enthaltenden Adresse, z. B. Teilnehmeradresse, eine in dieser enthaltene, gemäss einem ersten Numerierungsplan gebildete Rufnummer durch eine Rufnummer eines zweiten Numerierungsplans zu ersetzen.

5. Vermittlungseinrichtung nach einem der Ansprüche 1 bis 4,
**dadurch gekennzeichnet, dass**
die Konvertierungseinheit (24) dazu eingerichtet ist, im Rahmen der Konvertierung der enthaltenen Adresse, z. B. Teilnehmeradresse, einen in dieser enthaltenen Numerierungsplanindikator (NPI) zu beeinflussen.

6. Vermittlungseinrichtung nach einem der Ansprüche 1 bis 5,
**dadurch gekennzeichnet, dass**
die Konvertierungseinheit (24) dazu eingerichtet ist, im Rahmen der Konvertierung der enthaltenen Adresse, z. B. Teilnehmeradresse einen in dieser enthaltenen Nummerntypindikator (TON), Screening Indicator und/oder Presentation Indicator zu beeinflussen.

7. Vermittlungseinrichtung nach einem der Ansprüche 1 bis 6,
**dadurch gekennzeichnet, dass**
die Konvertierungseinheit (24) dazu eingerichtet ist, bei jedem die Vermittlungseinrichtung erreichenden oder verlassenden Ruf eine in diesem enthaltene Adresse, z. B. Teilnehmeradresse, auf Übereinstimmung mit den gespeicherten ersten Adressbestandteilen zu überprüfen und bei Übereinstimmung die zugeordneten zweiten Adressbestandteile in die Teilnehmeradresse zu übernehmen.

8. Vermittlungseinrichtung nach Anspruch 7,
**dadurch gekennzeichnet, dass**
die ersten Adressbestandteile zumindest einen Teil einer Rufnummer umfassen.

9. Vermittlungseinrichtung nach Anspruch 8,
**dadurch gekennzeichnet, dass**
auch die zweiten Adressbestandteile zumindest einen Teil einer Rufnummer umfassen.

10. Vermittlungseinrichtung nach einem der Ansprüche 1 bis 9,
**dadurch gekennzeichnet, dass**
die Vermittlungsaufgaben der Vermittlungseinrichtung von einer Telekommunikationsanlage (10) des privaten Telekommunikationsnetzes (12) erfüllt werden und die Konvertierungseinheit (24) baulich in diese Telekommunikationsanlage (10) integriert ist.

11. Vermittlungseinrichtung nach einem der Ansprüche 1 bis 9,
**dadurch gekennzeichnet, dass**
die Vermittlungsaufgaben der Vermittlungseinrichtung von einer Telekommunikationsanlage (10) des privaten Telekommunikationsnetzes (12) erfüllt werden, die Konvertierungseinheit (24) jedoch baulich von dieser Telekommunikationsanlage (10) getrennt angeordnet ist.

12. Vermittlungseinrichtung nach einem der Ansprüche 1 bis 11,
**dadurch gekennzeichnet, dass**
die Aufgaben der Konvertierungseinheit (24) von einem Softwaremodul erfüllt werden, welches in die Vermitilungseinrichtung implementiert ist.

## Claims

1. Switching device for a private telecommunications network (12), comprising a conversion unit (24), associated with said device, for converting an address, for example subscriber address, contained in a call reaching or leaving the switching device, the conversion unit (24) being designed, within this conversion, to amend at least part of the contained address, for example subscriber address, the conversion unit comprising a memory (26) in which at least one data set is stored which comprises second address components in association with first address components, **characterised in that** the address components each comprise, in addition to digits of the call number, at least one additional element, each data set contains an indication of a particular line and an indication of the call direction, and **in that** the conversion unit (24) is designed, for each call reaching or leaving the switching device, to test whether the line and call direction of the call match the indications in one of the data sets and in the case of a match the conversion is carried out on the basis of the matching data set.

2. Switching device according to claim 1, **characterised in that** the conversion unit (24) is designed to convert the address of the calling subscriber.

3. Switching device according to either claim 1 or claim 2, **characterised in that** the conversion unit (24) is designed to convert the address of the called subscriber or addresses conveyed by features.

4. Switching device according to any of claims 1 to 3, **characterised in that** the conversion unit (24) is designed, within the conversion of the contained address, for example subscriber address, to replace a call number contained therein and formed according to a first numbering plan with a call number of a second numbering plan.

5. Switching device according to any of claims 1 to 4, **characterised in that** the conversion unit (24) is designed, within the conversion of the contained address, for example subscriber address, to influence a numbering plan indicator (NPI) contained therein.

6. Switching device according to any of claims 1 to 5, **characterised in that** the conversion unit (24) is designed, within the conversion of the contained address, for example subscriber address, to influence a number type indicator (TON), screening indicator and/or presentation indicator contained therein.

7. Switching device according to any of claims 1 to 6, **characterised in that** the conversion unit (24) is designed, for each call reaching or leaving the switching device, to check an address, for example subscriber address, contained therein for a match with the stored first address components and in the case of a match to transfer the associated second address components into the subscriber address.

8. Switching device according to claim 7, **characterised in that** the first address components comprise at least part of a call number.

9. Switching device according to claim 8, **characterised in that** the second address components also comprise at least part of a call number.

10. Switching device according to any of claims 1 to 9, **characterised in that** the switching tasks of the switching device are performed by a telecommunications system (10) of the private telecommunications network (12) and the conversion unit (24) is structurally integrated into this telecommunications system (10).

11. Switching device according to any of claims 1 to 9, **characterised in that** the switching tasks of the switching device are performed by a telecommunications system (10) of the private telecommunications network (12) but the conversion unit (24) is structurally separate from this telecommunications system (10).

12. Switching device according to any of claims 1 to 11, **characterised in that** the tasks of the conversion unit (24) are performed by a software module which is implemented in the switching device.

## Revendications

1. Dispositif de commutation pour un réseau de télécommunication privé (12), comprenant une unité de conversion (24) qui lui est associée en vue de la conversion d'une adresse contenue dans un appel atteignant ou quittant le dispositif de commutation, par exemple une adresse d'abonné, l'unité de conversion (24) étant ajustée de manière à modifier dans le cadre de cette conversion au moins une partie de l'adresse contenue, par exemple une adresse d'abonné, l'unité de conversion comprenant une mémoire (26), dans laquelle au moins un jeu de données est mémorisé, lequel comprend en association avec des premiers composants d'adresse des deuxièmes composants d'adresse, **caractérisé en ce que** les composants d'adresse comprennent respectivement outre des chiffres du numéro d'appel au moins un élément supplémentaire, chaque jeu de données contient une indication relative à une ligne déterminée et une indication relative à une direction d'appel, et **en ce que** l'unité de conversion (24) est ajustée de manière à vérifier lors de chaque appel atteignant ou quittant le dispositif de commutation si la ligne et la direction d'appel de l'appel concordent avec les indications dans l'un des jeux de données et en cas de concordance la conversion est exécutée à l'aide du jeu de données concordant.

2. Dispositif de commutation selon la revendication 1, **caractérisé en ce que** l'unité de conversion (24) est ajustée de manière à convertir l'adresse de l'abonné appelant.

3. Dispositif de commutation selon la revendication 1 ou 2, **caractérisé en ce que** l'unité de conversion (24) est ajustée de manière à convertir l'adresse de l'abonné appelé ou des adresses transmises par des caractéristiques.

4. Dispositif de commutation selon l'une des revendications 1 à 3, **caractérisé en ce que** l'unité de conversion (24) est ajustée de manière à remplacer dans le cadre de la conversion de l'adresse contenue, par exemple une adresse d'abonné, un numéro d'appel contenu dans celle-ci et formé selon un premier plan de numérotage par un numéro d'appel d'un deuxième plan de numérotage.

5. Dispositif de commutation selon l'une des revendications 1 à 4, **caractérisé en ce que** l'unité de conversion (24) est ajustée de manière à influencer dans le cadre de la conversion de l'adresse contenue, par exemple une adresse d'abonné, un indicateur de plan de numérotage (NPI) contenu dans celle-ci.

6. Dispositif de commutation selon l'une des revendications 1 à 5, **caractérisé en ce que** l'unité de conversion (24) est ajustée de manière à influencer dans le cadre de la conversion de l'adresse contenue, par exemple une adresse d'abonné, un indicateur de type de numéro (TON), un indicateur de filtrage et/ou un indicateur de présentation contenus dans celle-ci.

7. Dispositif de commutation selon l'une des revendications 1 à 6, **caractérisé en ce que** l'unité de conversion (24) est ajustée de manière à vérifier lors de chaque appel atteignant ou quittant le dispositif de commutation la concordance d'une adresse d'abonné contenue dans l'appel, par exemple une adresse d'abonné, avec les premiers composants d'adresse mémorisés et en cas de concordance reprendre dans l'adresse d'abonné les deuxièmes composants d'adresse associés.

8. Dispositif de commutation selon la revendication 7, **caractérisé en ce que** les premiers composants d'adresse comprennent au moins une partie d'un numéro d'appel.

9. Dispositif de commutation selon la revendication 8, **caractérisé en ce que** les deuxièmes composants d'adresse également comprennent au moins une partie d'un numéro d'appel.

10. Dispositif de commutation selon l'une des revendications 1 à 9, **caractérisé en ce que** les objectifs de commutation du dispositif de commutation sont remplis par une installation de télécommunication (10) du réseau de télécommunication privé (12) et l'unité de conversion (24) est intégrée structurellement dans cette installation de télécommunication (10).

11. Dispositif de commutation selon l'une des revendications 1 à 9, **caractérisé en ce que** les objectifs de commutation du dispositif de commutation sont remplis par une installation de télécommunication (10) du réseau de télécommunication privé (12), l'unité de conversion (24) étant toutefois séparée structurellement de cette installation de télécommunication (10).

12. Dispositif de commutation selon l'une des revendications 1 à 11, **caractérisé en ce que** les objectifs de l'unité de conversion (24) sont remplis par un module logiciel, lequel est implémenté dans le dispositif de commutation.
